Europäisches Patentamt

European Patent Office

Office européen des brevets

(11) Veröffentlichungsnummer: **0 262 608**

**A1**

(12) **EUROPÄISCHE PATENTANMELDUNG**

(21) Anmeldenummer: **87114042.2**

(22) Anmeldetag: **25.09.87**

(51) Int. Cl.⁴: **G06F 13/26**

(30) Priorität: **30.09.86 DE 3633298**

(43) Veröffentlichungstag der Anmeldung:
**06.04.88 Patentblatt 88/14**

(84) Benannte Vertragsstaaten:
**CH DE GB LI NL**

(71) Anmelder: **Siemens Aktiengesellschaft Berlin und München**
**Wittelsbacherplatz 2**
**D-8000 München 2(DE)**

(72) Erfinder: **Rotscheidt, Wolfgang, Dipl.-Ing.**
**Lindenberg 8**
**D-8134 Pöcking(DE)**
Erfinder: **Müller, Rudolf, Dipl.-Ing.**
**Aiblinger Strasse 4**
**D-8039 Rott/Inn(DE)**
Erfinder: **Widmaier, Hans-Dieter, Dipl.-Ing.**
**Gräfelfinger Strasse 18**
**D-8000 München(DE)**

(54) **Anordnung zum Auswählen von Prioritäten bei einer Unterbrechungssteuerung.**

(57) Zum Auswählen unterschiedlicher Prioritäten bei einer Unterbrechungssteuerung für einen Mikrorechner (MC) wird einer Unterbrechungssteuereinheit (IN) eine Schaltstufe (S) vorgeschaltet, die unterschiedlichen Unterbrechungssignalen (I) veränderbare Prioritäten zuordnet. Die Schaltstufe (S) enthält eine matrixförmig aufgebaute Zuordnungseinheit (Z1) und eine ebenfalls matrixförmig ausgebildete Speichereinheit (SP), in der die veränderbar zugeordneten Prioritäten speicherbar sind. Die Einspeicherung der unterschiedlichen Prioritäten kann programmgesteuert durch den Mikrorechner (MC) erfolgen. Es kann eine weitere Zuordnungseinheit (Z2) vorgesehen sein, die unabhängig von der jeweiligen Priorität eines Unterbrechungssignals (IN) jeweils den richtigen Unterbrechungsvektor auslöst.

FIG 3

## Anordnung zum Auswählen von Prioritäten bei einer Unterbrechungssteuerung

Die Erfindung bezieht sich auf eine Anordnung zum Auswählen von Prioritäten bei einer Unterbrechungssteuerung gemäß dem Oberbegriff des Patentanspruchs 1.

Es sind bereits Unterbrechungssteuereinheiten allgemein bekannt, die mit Eingängen versehen sind, an die Unterbrechungen eines Mikrorechners auslösende Schaltkreise anschließbar sind. Wenn ein Schaltkreis ein Unterbrechungssignal an einen dieser Eingänge abgibt, unterbricht die Unterbrechungssteuereinheit den Mikrorechner und teilt ihm mit, welcher Eingang nach einer Unterbrechung verlangt hat. Da nun nicht alle Unterbrechungssignale gleichwertig behandelt werden können, muß die Unterbrechungssteuereinheit entscheiden, welchem Unterbrechungssignal welche Priorität, d. h. welche Dringlichkeit zuzuordnen ist. Dies bedeutet, daß ein Unterbrechungssignal an einem Eingang, der eine höhere Priorität hat, einen durch ein Unterbrechungssignal an einem Eingang mit niedrigerer Priorität ausgelösten Unterbrechungsvorgang seinerseits unterbrechen kann, aber nicht umgekehrt.

Die Reihenfolge der Priorität wird bei handelsüblichen Unterbrechungssteuereinheiten den Eingängen fest zugeordnet. Im Handel ist beispielsweise unter der Bezeichnung 8259A eine Unterbrechungssteuereinheit erhältlich, die acht Eingänge aufweist, wobei der Eingang 0 die höchste und der Eingang 7 die niedrigste Priorität aufweist.

Eine derartige fest vorgegebene Einstellung der Prioritäten hat den grundsätzlichen Nachteil, daß durch die Verdrahtung festgelegte Prioritäten nur durch eine Änderung der Verdrahtung verändert werden kann. Außerdem ist es nicht ohne weite res möglich, die Prioritäten während des Betriebs dynamisch zu verändern. Der Grund liegt darin, daß beim Übersetzen eines Programms für den Mikrorechner eine feste Zuordnung zwischen den Unterbrechungsroutinen und einem zugehörigen Unterbrechungsvektor hergestellt werden muß.

Der Erfindung liegt daher die Aufgabe zugrunde, eine Anordnung anzugeben, mit deren Hilfe die Prioritäten mit geringem Aufwand beliebig veränderbar sind.

Erfindungsgemäß wird die Aufgabe bei der Anordnung der eingangs genannten Art durch die im kennzeichnenden Teil des Patentanspruchs 1 angegebenen Merkmale gelöst.

Die Anordnung gemäß der Erfindung hat den Vorteil, daß sie eine große Flexibilität aufweist, da die Prioritäten beliebig zugeordnet werden können, wobei jedoch normalerweise die Prioritäten nur um wenige Stufen verändert werden. Die Anordnung kann derart dargestellt werden, daß mehrere Ebenen übereinanderliegen und jede Ebene eine bestimmte Funktion hat. Die unterste Ebene, die eine Speichereinheit darstellt, speichert die Einstellungen, welchem Unterbrechungsvorgang welche Priorität zugeordnet ist. Die nächste Ebene, die eine Zuordnungseinheit darstellt, kann als eine Schaltermatrix aufgefaßt werden, die entsprechende Verbindungen zwischen den Unterbrechungssignalen und der Unterbrechungssteuereinheit vornimmt und es kann eine dritte Ebene vorgesehen sein, die als eine weitere Zuordnungseinheit ausgebildet ist und die bei einer Unterbrechungssteuerung derart eingesetzt werden kann, daß die Zuordnung zwischen einem Unterbrechungssignal und einem Unterbrechungsvektor auch bei einer geänderten Priorität erhalten bleibt.

Die Zuordnungseinheit läßt sich als eine Matrix mit einer vorgegebenen Anzahl von spalten und Zeilen darstellen. Jeder Spalte wird ein Unterbrechungssignal zugeführt und jede Zeile stellt einen Eingang für die Unterbrechungssteuereinheit dar. Unter Verwendung eines Rücksetzsignals wird in der Speichereinheit eine Grundeinstellung erzeugt, bei der jeweils ein Unterbrechungssignal einem Eingang der Unterbrechungssteuereinheit zugeordnet ist. In den Kreuzungspunkten der Matrix befinden sich Schaltelemente, die gesteuert durch Speicherelemente der Speichereinheit die Priorität festlegen. Hierbei ist festzustellen, daß nicht in jedem Kreuzungspunkt Speicherelemente bzw. Schaltelemente vorgesehen werden müssen, da eine einmal festgelegte Reihenfolge der Prioritäten in der Regel nicht grundsätzlich, sondern oft nur geringfügig verändert werden muß. Beispielsweise wird die Priorität lediglich um ein bis drei Stufen nach oben und nach unten verändert. Es ist auch möglich, die Prioritäten nichtlinear zu verändern, d. h. den verschiedenen Unterbrechungen eine unterschiedliche Zahl von Prioritäten zuzuordnen.

Die Schaltglieder in den Kreuzungspunkten der Matrix der Zuordnungseinheit können aus Tri-State-Gattern oder aus UND-Gliedern und nachgeschalteten ODER-Gliedern gebildet werden. Bei der Speichereinheit werden die Speicherelemente vorzugsweise aus Flipflops gebildet. Diesen Flipflops kann das Rücksetzsignal zuführbar sein, das die Grundeinstellung der Prioritäten einstellt. Die Einstellung der weiteren Prioritätsmöglichkeiten erfolgt zweckmäßigerweise programmgesteuert, wobei die Inhalte der Speicherelemente beispielsweise über den Datenbus des Mikrorechners und über Decodierer eingestellt werden.

Ausführungsbeispiele der Anordnung gemäß der Erfindung werden im folgenden anhand von Zeichnungen näher erläutert. Es zeigen

FIG 1 ein Blockschaltbild der Anordnung,

FIG 2 eine schematische Darstellung von Schaltgliedern in einer Zuordnungseinheit für die Prioritäten,

FIG 3 eine schematische Darstellung der Anordnung durch mehrere Ebenen, die aus einer Speichereinheit, einer Zuordnungseinheit und einer weiteren Zuordnungseinheit gebildet werden,

FIG 4 Ausschnitte der Speichereinheit und der Zuordnungseinheit und

FIG 5 einen Ausschnitt der weiteren Zuordnungseinheit.

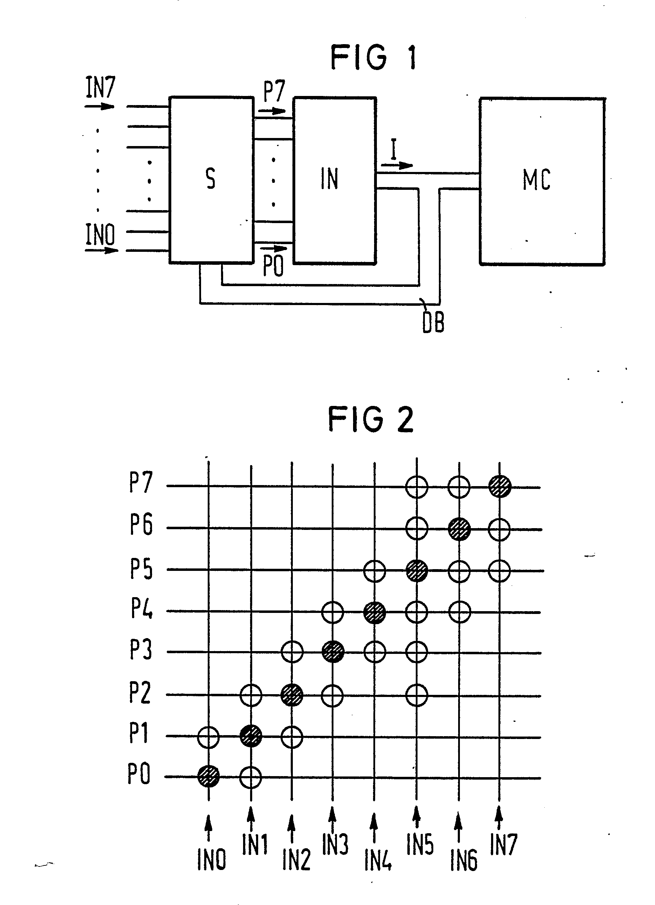

Bei der in FIG 1 dargestellten Anordnung ist an einem Mikrorechner MC über einen Datenbus DB in an sich bekannter Weise eine Unterbrechungssteuereinheit IN angeschlossen. Dieser Unterbrechungseinheit IN werden beispielsweise acht Prioritätssignale P0 bis P7 zugeführt, die fest verdrahteten Prioritäten in der Unterbrechungseinheit IN zugeordnet sind. Das Prioritätssignal P0 hat die höchste Priorität und das Prioritätssignal P7 hat die niedrigste Priorität. Der Unterbrechungseinheit IN ist eine Schaltstufe S vorgeschaltet, die die feste Zuordnung der Prioritäten veränderbar gestaltet. Der Schaltstufe S werden Unterbrechungssignale IN0 bis IN7 zugeführt, die unterschiedlichen Prioritätssignalen P0 bis P7 zugeordnet werden können, so daß den Unterbrechungssignalen IN0 bis IN7 unterschiedliche Prioritäten zugeordnet werden können. Die Zuordnung zwischen den Unterbrechungssignalen IN0 bis IN7 und den entsprechenden Prioritäten kann beispielsweise programmgesteuert über den Mikrorechner MC und den Datenbus DB erfolgen.

Die Darstellung in FIG 2 zeigt schematisch eine Zuordnungseinheit für die Zuordnung der Unterbrechungssignale IN0 bis IN7 und die der Unterbrechungssteuereinheit IN zugeführten Prioritätssignale P0 bis P7. Die Kreise stellen dabei Schaltelemente dar, die in den Kreuzungspunkten der matrixförmigen Zuordnungseinheit angeordnet sind. Die dunklen Kreise geben dabei jeweils eine Grundeinstellung der Prioritäten an und die in Vertikalrichtung benachbarten Kreise geben die möglichen anderen Prioritäten an. Dem Unterbrechungssignal IN0 kann außer dem Prioritätssignal P0 auch das Prioritätssignal P1 zugeordnet werden. Dem Unterbrechungssignal IN1 wird in der Grundeinstellung das Prioritätssignal P1 zugeordnet. Es ist jedoch auch möglich, programmgesteuert ihm Prioritätssignale P0 oder P2 zuzuordnen. Entsprechendes gilt für die Unterbrechungssignale IN1 bis IN4, denen jeweils eine Stufe der Priorität nach beiden Richtungen zugeordnet werden kann. Die Zuordnungseinheit ist nicht linear aufgebaut, was daraus ersehen werden kann, daß dem Unterbrechungssignal IN5 in der Grundeinstellung das Prioritätssignal P5 und die Prioritätssignale P6 und P7 in zwei Stufen nach oben und die Prioritätssignale P4 bis P2 in drei Stufen nach unten zugeordnet werden können und daß auch den Unterbrechungssignalen IN6 und IN7 unterschiedliche Anzahlen von Stufen von Prioritäten zugeordnet werden können.

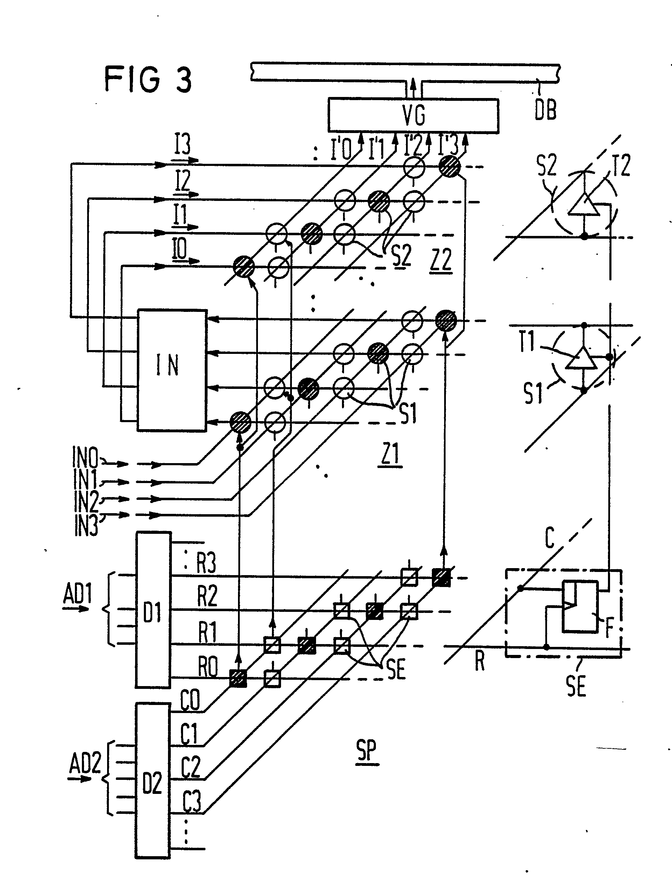

Bei der Darstellung in FIG 3 ist die Schaltstufe S durch eine Speichereinheit SP mit zugehörigen Decodierern D1 und D2 und eine Zuordnungseinheit Z1 dargestellt. Sowohl die Speichereinheit SP als auch die Zuordnungseinheit Z1 sind matrixförmig ausgebildet und weisen Zeilen und Spalten auf. In den den möglichen Prioritäten zugeordneten Kreuzungspunkten sind bei der Speichereinheit SP Speicherelemente SE und bei dem Zuordner Z1 Schaltelemente S1 angeordnet. In der Grundeinstellung werden über Adressensignale AD1 und AD2, die beispielsweise vom Mikrorechner MC über den Datenbus DB zugeführt werden, die - schraffiert dargestellten Speicherelemente SE gesetzt, während die anderen Speicherelemente SE zurückgesetzt werden. Die Ausgänge der Speicherelemente SE, die beispielsweise jeweils ein Flipflop F enthalten, dessen Dateneingang mit der jeweiligen Spaltenleitung C und dessen Takteingang mit der jeweiligen Zeilenleitung R verbunden ist, sind mit Steuereingängen der entsprechenden Schaltglieder S1 verbunden, die in den Kreuzungspunkten zwischen den Zeilenleitungen und den Spaltenleitungen der Zuordnungseinheit Z1 angeordnet sind. Die Schaltelemente S1 sind beispielsweise als Tri-State-Gatter T1 ausgebildet, deren Steuereingang mit dem Ausgang des jeweiligen Flipflops F verbunden ist. Entsprechend der Grundeinstellung sind die als die schraffiert dargestellten Kreise sinnbildlich dargestellten Schaltelemente S1 leitend gesteuert, so daß eine Zuordnung zwischen den Unterbrechungssignalen IN0 bis IN3 zu den Prioritätssignalen P0 bis P3 erfolgt. Aus Gründen der Übersichtlichkeit wurden nur vier Unterbrechungssignale IN0 bis IN3 und vier Prioritätssignale P0 bis P3 dargestellt. Die Prioritätssignale P0 bis P3 werden der Unterbrechungssteuereinheit IN zugeführt, die die Unterbrechungssignale I0 bis I3 erzeugt und entweder unmittelbar oder über eine weitere Zuordnungseinheit Z2 einem Vektorgenerator VG zuführt, der einen Unterbrechungsvektor für den Mikrorechner MC erzeugt und an den Datenbus DB abgibt.

Ohne die Verwendung der weiteren Zuordnungseinheit Z2 wird jedem Prioritätssignal P0 bis P3 eine bestimmte Priorität und damit ein fester Unterbrechungsvektor zugeordnet. Der Unterbrechungsvektor zeigt hierbei auf den Beginn der zugeordneten Unterbrechungsroutine. Beim Zuordnen eines Unterbrechungssignals IN0 bis IN3 zu einem anderen Prioritätssignal P0 bis P3 würde damit eine Unterbrechung ebenfalls einen veränderten Unterbrechungsvektor verursachen und damit würde die Abarbeitung einer falschen Unterbrechungsroutine ausgelöst werden. Dies ist jedoch nur dann störend, wenn die Prioritäten während des Betriebs verändert werden sollen, da bei einer einmaligen Neuzuordnung der Prioritäten die Unterbrechungsvektoren auch durch ein geändertes Programm angepaßt werden können. Um jedoch die Möglichkeit zu erhalten, auch während eines Programmlaufs die Priorität dynamisch umzuschalten, wird die weitere Zuordnungseinheit Z2 vorgesehen, die ebenfalls matrixförmig ausgebildet ist und die in entsprechender Weise wie die Zuordnungseinheit Z1 in den Kreuzungspunkten der Matrix Schaltelemente S2 enthält, die ebenfalls als Tri-State-Gatter T2 ausgebildet sein können. Die Schaltelemente S2 werden ebenfalls durch die Speicherelemente SE angesteuert und jeder Ausgang der Unterbrechungssteuereinheit IN erzeugt damit einen jeweils richtigen Unterbrechungsvektor. Damit wird unabhängig von der Priorität der jeweiligen Unterbrechung immer derselbe Unterbrechungsvektor für die Behandlung der Unterbrechung erzeugt.

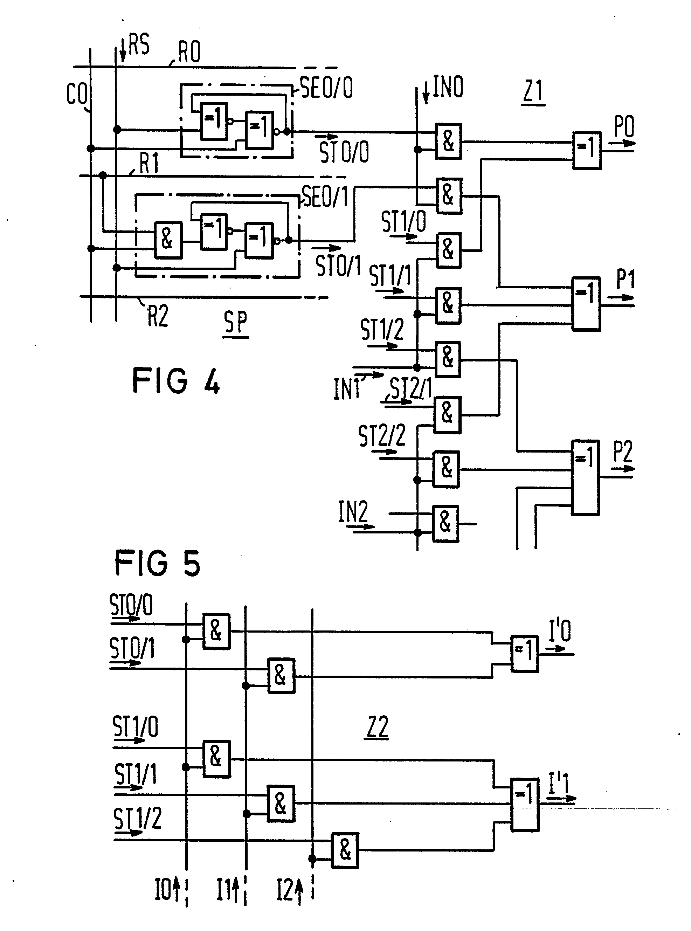

Bei dem in FIG 4 dargestellten Ausschnitt der Speichereinheit SP sind die Speicherelemente SE aus Verknüpfungsgliedern, nämlich aus ODER-Gliedern bzw. aus ODER-Gliedern und einem UND-Glied aufgebaut. Durch ein Rücksetzsignal RS wird für eine Grundstellung die Speichereinheit SE0/0 gesetzt, während die Speichereinheit SE0/1 zurückgesetzt wird. Durch ein Signal auf der Spaltenleitung C0 kann die Speichereinheit SE0/0 gesetzt werden und die Speichereinheit SE0/1 wird dann gesetzt, wenn auf der Spaltenleitung C0 und auf der Zeilenleitung R1 Signale auftreten. Die übrigen Speichereinheiten SE sind in ähnlicher Weise ausgebildet wie die Speichereinheiten SE0/0 bzw. SE0/1 und sind mit den Spaltenleitungen C0 bis C3 in FIG 3 bzw. den Zeilenleitungen R0 bis R3 verbunden, jedoch sind aus Gründen der Übersichtlichkeit lediglich die beiden Speicherelemente SE0/0 und SE0/1 dargestellt.

Die Zuordnungseinheit Z1 enthält bei der in FIG 4 dargestellten Ausführungsform keine Schaltglieder in Form von Tri-State-Gattern, sondern die Matrix ist durch UND-Glieder und ODER-Glieder ausgeführt, die zur Erzeugung der entsprechenden Prioritätssignale P0 bis P3 entsprechend verdrahtet sind. Das Prioritätssignal P0 wird in Übereinstimmung mit den FIG 2 und 3 nur dann erzeugt, wenn entweder das Unterbrechungssignal IN0 oder das Unterbrechungssignal IN1 vorliegen und entweder das Steuersignal ST0/0 oder das Steuersignal ST1/0 vorliegt, wobei die 0 vor dem Schrägstrich die Spaltennummer und die 0 nach dem Schrägstrich die Zeilennummer angibt. In entsprechender Weise wird das Prioritätssignal P1 nur dann erzeugt, wenn eines der Unterbrechungssignale IN0 bis IN2 vorliegt und eines der Speicherelemente SE01, SE11 oder SE21 gesetzt ist und ein entsprechendes Steuersignal ST0/1, ST1/1 oder ST2/1 erzeugt wird. Entsprechendes gilt für die übrigen Prioritätssignale.

Die in FIG 5 teilweise dargestellte Zuordnungseinheit Z2 ist bei dieser Ausführungsform ebenfalls nicht durch Tri-State-Gatter, sondern durch UND-Glieder und ODER-Glieder dargestellt. Die UND-Glieder und die ODER-Glieder verknüpfen die Unterbrechungssignale I0 bis I3 und die von den Speichereinheiten SE abgegebenen Steuersignale ST derart, daß unabhängig von der Prioritätsstufe eines Unterbrechungsvorgangs immer dieselben Unterbrechungssignale I'0 bis I'3 erzeugt werden. Das Unterbrechungssignale I'0 wird beispielsweise dann erzeugt, wenn eines der Unterbrechungssignale I0 oder I1 vorliegt und ein entsprechendes Speicherelement SE gesetzt ist und das zugehörige Steuersignal ST0/0 bzw. ST0/1 erzeugt wird. In der Grundeinstellung entspricht das Unterbrechungssignal I0 dem Unterbrechungssignal I'0, da das Speicherelement SE0/0 gesetzt ist. Falls jedoch das Speicherelement SE0/1 gesetzt ist, wird dasselbe Unterbrechungssignal I'0 auch dann erzeugt, wenn das Unterbrechungssignal I1 von der Unterbrechungssteuereinheit IN anstelle des Unterbrechungssteuersignals I0 abgegeben wird.

## Ansprüche

1. Anordnung zum Auswählen von Prioritäten bei einer Unterbrechungssteuerung unter Verwendung einer Unterbrechungssteuereinheit, die mit einem Mikrorechner verbunden ist und die entsprechend den Prioritätssignalen an ihren Eingängen Unterbrechungssignale mit vorgegebenen Prioritäten an den Mikrorechner abgibt, **dadurch gekennzeichnet**, daß der Unterbrechungssteuereinheit (IN) eine Schaltstufe (S) vorgeschaltet ist, die Unterbrechungssignalen (IN0 bis IN3) in veränderbarer Weise die Prioritätssignale (P0 bis P3) zuordnet.

2. Anordnung nach Anspruch 1, **dadurch gekennzeichnet**, daß die Schaltstufe (S) eine Zuordnungseinheit (Z1) zum veränderbaren Zuordnen der Unterbrechungssignale (IN0 bis IN3) zu den Prioritätssignalen (P0 bis P3) und eine Speichereinheit (SP) enthält, die Speicherelemente (SE) zum Speichern der Zuordnungen enthält.

3. Anordnung nach Anspruch 1 oder Anspruch 2, **dadurch gekennzeichnet**, daß zwischen der Unterbrechungssteuereinheit (IN) und dem Mikrorechner (MC) eine weitere Zuordnungseinheit (Z2) angeordnet ist, die auch bei geänderter Priorität die Erzeugung eines jeweils richtigen Unterbrechungsvektors für den Mikrorechner (MC) erzeugt.

4. Anordnung nach einem der Ansprüche 1 bis 3, **dadurch gekennzeichnet**, daß die Zuordnungseinheiten (Z1, Z2) und die Speichereinheit (SP) jeweils in Form einer Matrix ausgebildet sind.

5. Anordnung nach Anspruch 4, **dadurch gekennzeichnet**, daß an den Kreuzungspunkten der Matrix der Zuordnungseinheiten (Z1, Z2) für die gewünschten Prioritäten Schaltglieder (S1, S2) vorgesehen sind.

6. Anordnung nach Anspruch 4, **dadurch gekennzeichnet**, daß die Schaltglieder (S1, S2) als Tri-State-Gatter (T1, T2) ausgebildet sind, deren Steuereingänge mit den Speicherelementen (SE) der Speichereinheit (SP) verbunden sind.

7. Anordnung nach einem der Ansprüche 1 bis 3, **dadurch gekennzeichnet**, daß die Zuordnungseinheiten (Z1, Z2) aus UND-Gliedern und ODER-Gliedern aufgebaut sind.

8. Anordnung nach Anspruch 4, **dadurch gekennzeichnet**, daß die Speichereinheit (SP) in den Kreuzungspunkten der Matrix für die gewünschten Prioritäten Speicherelemente (SE) enthält.

9. Anordnung nach Anspruch 8, **dadurch gekennzeichnet**, daß den Speicherelementen (SE) ein Rücksetzsignal (RS) zuführbar ist, das eine Grundeinstellung der Prioritäten auslöst.

10. Anordnung nach Anspruch 4, **dadurch gekennzeichnet**, daß die Kreuzungspunkte der Matrix der Speichereinheit (SP) und der Zuordnungseinheiten (Z1, Z2) nur teilweise besetzt ist.

11. Anordnung nach einem der Ansprüche 1 bis 10, **dadurch gekennzeichnet**, daß die veränderbare Einstellung der Prioritäten programmgesteuert erfolgt.

# FIG 1

# FIG 2

FIG 3

FIG 4

FIG 5

Europäisches
Patentamt

**EUROPÄISCHER RECHERCHENBERICHT**

Nummer der Anmeldung

EP 87 11 4042

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | IBM TECHNICAL DISCLOSURE BULLETIN, Band 11, Nr. 8, Januar 1969, Seiten 920-921, New York, US; J.R. MOYSEY: "Programmable priority circuit" * Insgesamt * | 1,3,7, 11 | G 06 F 13/26 |
| A | Idem | 2,4 | |
| | ----- | | |

RECHERCHIERTE SACHGEBIETE (Int. Cl.4)

G 06 F 13/26

Der vorliegende Recherchenbericht wurde für alle Patentansprüche erstellt

| Recherchenort | Abschlußdatum der Recherche | Prüfer |
|---|---|---|
| DEN HAAG | 25-11-1987 | DHEERE R.F.B.M. |